# EUROPEAN PATENT APPLICATION

(11) **EP 1 870 218 A1**
(43) Date of publication of application: **26.12.2007**
(21) Application number: 06425432.9
(22) Date of filing: 23.06.2006
(51) Int. Cl.: B29C 35/16, B29C 45/72, B29C 43/52, B29C 47/88, B29C 49/64

(54) **Apparatus and method for hot moulding of products made of a thermoplastic material**

(71) Applicant: B.M. Industria Bergamasca Mobili S.P.A., 24060 Bagnatica (IT)
(72) Inventor: Barcella, Alberto, 24060 Brusaporto (BG) (IT); Marengo, Marco, 24044 Dalmine (BG) (IT)
(74) Representative: Trupiano, Federica

(57) **Abstract**

The present invention relates to a method and an apparatus for the thermal treatment of products produced by hot moulding of thermoplastic materials. The cooling phase of the moulded product, advantageously extracted from the mould at a temperature near to that of melting point of the material of which it is composed, is carried out outside the mould by directing one ot more jets of a fluid in liquid phase, if necessary vaporised or atomised, against the surface of the product.

## Description

The present invention relates to a method and apparatus for the hot moulding of products in thermoplastic material, particularly for the cooling of products obtained by hot injection of plastic materials into moulds.

The production of products by the injection of thermoplastic materials into suitably shaped metal moulds is known in many sectors of the art. The moulds are mainly shaped by elements and contra-elements that, when united to close the mould, define a hollow space that reproduces the shape of the object that it is desired to obtain. The materials used, initially available in solid phase, usually as granules, are liquefied by increasing the temperature above their relative melting point and injected by one or more nozzles into the hollow space inside the closed mould. Subsequently, the mould is cooled to solidify the injected material and then to extract the finished product.

With this system it is possible to produce parts, components, objects, etc., having complex shapes even for the most varied applications, e.g. for the production of objects in the auto, electrical appliance, electronic, aerospace and biomedical apparatus industries, etc.

The cooling of the mould is a critical phase of the whole production process. The thermoplastic material is injected at temperatures higher than the melting point of the same material, and solidifies by surrendering heat to the surfaces of the mould that delimit the hollow space. During the solidification phase, the mechanical properties of the moulded product are scarce. In other words, the mould cannot be opened until the thermoplastic material inside the hollow space is completely solid, i.e. the elements and the contra-elements that compose the mould cannot be separated without causing the loss of the same product by the collapse of its structure, or by deformation or by breakup.

Disadvantageously, during the cooling phase, the mould cannot be re-used for the production of another product, with obvious negative effects on productivity. In the processes of hot moulding of products in plastic material, the duration of the mould cooling and solidification of the injected material phase constitutes up to 80% of the duration of the whole production process. It is desirable to have a method and apparatus that minimises the duration of such phase.

The control of the temperature of the internal surfaces of the mould and the control of the thermal exchange between such surfaces and the injected material have been an object of study and research for a long time. The builders of moulds adopt different technical solutions to promote thermal exchange and to cool the injected material quickly.

For example, the dimensions of the internal hollow space of the mould are known to have been varied to increase or reduce the thickness of the walls of the object that it is desired to produce. A reduction of such thickness involves a reduction of the thermal inertia of the moulded object and, consequently, a reduction of the time necessary for cooling it. A limit is constituted by it not being possible to reduce the thickness of the walls of the moulded product beyond certain limits imposed by structural considerations. In other words, the thickness of the walls of the moulded object cannot, in general, to be reduced beyond values that correspond to structural yielding of the same object under its conditions of use.

Some traditional moulds are provided with internal channels in which a cooling fluid - usually water - circulates. The channels are located in the body of the mould in proximity of the surfaces that delimit the hollow space into which the thermoplastic material is injected. By varying the number, position and dimensions of the channels, and regulating the volume of cooling fluid inside the same channels, it is possible to control thermal exchange between the injected material and the surfaces of the hollow space.

This solution, however, also introduces non-negligible drawbacks. In the first place, the number of channels which can be made in the mould is limited, with obvious negative effect with respect to the uniformity of thermal exchange. In other words, it is not possible to have a large number of channels inside the mould for obvious reasons of space and for the technical difficulties that are often met in perforating the mould in proximity of the hollow space for the injection. In general, therefore, the channels are separated from each other, with the result that thermal exchange between the injected material and the surfaces of the hollow space is maximum in proximity of the channels, and decreases as the distance from the channels themselves increases. It is obvious that the thermal exchange obtained is not uniform and some portions of the injected material (hot spots) can solidify in considerably longer times than those portions near the channels.

Furthermore, the costs related to the work of creating the channels in the mould are high. Possible errors of workmanship could compromise the solidity of the mould, making it unusable.

Other solutions traditionally used for cooling the material injected into the mould provide for the use of inserts of high thermal-conductivity having the function of communicating the heat released by the injected material to the outside of the hollow space. Such inserts, mostly cylindrical in shape, are inserted into the material of the mould in proximity of the injection hollow space. The inserts are produced in a material particularly suited for heat transport, such as for instance beryllium, copper, aluminium, etc. Alternatively, the use of heat pipes in place of the inserts is known. This solution, however, also doesn't allow the injected material to cool in a uniform way.

In general, the duration of the cooling phase of the injected material in a traditional mould is considerable compared to the duration of the moulding process. The mould cannot be used for a new moulding during the cooling phase, leading to a loss of productivity of the process.

The traditional solutions have limited performance, i.e. the dissipation of thermal energy is limited by the number, location and dimensions of the channels or the inserts, as well as by the volume and the type of refrigerant fluid used in the same channels or in the heat pipes. Furthermore, the thermal exchange obtainable with the traditional methods and apparatus is not uniform, with obvious negative effects on the control of the cooling phase.

Furthermore, the methods and the apparatus traditionally used for hot moulding of thermoplastic products require cooling systems that are expensive and complicated to implement.

The purpose of the present invention is to make available a method and apparatus for the hot moulding of products in thermoplastic material that resolve in a simple and effective way the drawbacks of the traditional solutions, allowing at the same time the duration of the cooling phase to be minimised and the productivity of the moulding process to be maximised.

A further purpose of the present invention is to make available a method and apparatus for the hot moulding of products in thermoplastic material that allow, during the cooling phase, the local temperature of the material that forms the moulded product to be controlled.

A further purpose of the present invention is to make available a method and apparatus for the hot moulding of products in thermoplastic material that allow thermal exchange to be maximised and rendered uniform during the cooling phase.

These and other purposes are achieved by the present invention that relates to a method for the hot moulding of a product in thermoplastic material, characterized by comprising the phase of cooling at least one portion of said product by one or more jets of a cooling fluid directed against said portion.

Unlike the traditional solutions that provide for the cooling of the injected material inside the mould, the method according to the present invention provides for the opening of the mould subsequent to the injection of the thermoplastic material and the cooling of the same by one or more jets or spray of a cooling liquid. In other words, the opening of the mould is early compared with the typical times of the traditional solutions.

The method can also be applied advantageously to cooling the products produced by hot extrusion of a thermoplastic material, by directing the cooling fluid jets onto the material emerging from the extruder. In general, the method according to the present invention can be used for the thermal treatment of products produced with the known hot working of thermoplastic materials. For simplicity, in what follows, reference will be made to products produced by hot injection in moulds.

The number, the location, the volume and the orientation of the jets are established on the basis of the typology of the moulded product, that is on the basis of its dimensions, shape, thickness, material used for the injection, etc. By predisposing a sufficient number of jets, suitably directed and fed with a sufficient volume of fluid, it is possible to render product-fluid thermal exchange uniform.

Advantageously, the jets can be directed against the hot spots of the moulded product, in such way as to maximise thermal exchange in such points, usually difficult to cool by the traditional methods and apparatus. The method according to the present invention allows different portions of the moulded product to be selectively cooled in such a way as to render their cooling uniform, preventing some portions of the product from being cooled more quickly or more slowly than others.

The cooling fluid is a vapour or atomised or vaporised liquid. Fluids suited for the purpose are, for example, water, alcohol, ammonia, etc.. In the case in which fluid different from water is used, the atomisation or the vaporisation are provide for in a controlled atmosphere environment, to prevent the dispersion of harmful substances. In practice, a system of containment and recovery of the fluid fed to the mould is provided for.

The cooling fluid can be directed in proximity of the surfaces of the product that it is intended to cool. The atomisation or the vaporisation (spray or aerosol) enables minimum-sized drops of the fluid to be deposited on the surface, thus favouring fluid evaporation (flash evaporation) and maximising thermal exchange.

In some circumstances, the early opening of the mould could involve problems of structural stability of the product, in as much as the thermoplastic material that composes it would not have been able to solidify sufficiently. To avoid this drawback and prevent the product from collapsing on the opening of the mould, the same product undergoes a pre-cooling phase inside the mould by providing the mould with traditional channels and circulating cooling fluid. The pre-cooling phase has a minimum duration that enables the thermoplastic material to solidify sufficiently to enable the mould to be opened early and the subsequent cooling phase to be carried out by one or more cooling fluid jets that strike the surface of the product.

The direction and volume of the same cooling fluid jets can be regulated to support the structure of the moulded product. In this way, it is possible to prevent the product from collapsing during the cooling phase. In other words, the jets can be directed to strike selected areas of the surface of the product. The jets exert sufficient pressure on such areas to preserve the shape of the moulded product unchanged, and act as temporary support during the consolidation of its structure.

The opening of the mould can be effected in stages to expose increasing surfaces of the product to the cooling jets. For instance, the element and the contra-element that form the mould are first separated to leave half the moulded product exposed to the cooling fluid jets. The other half of the product that remains lodged in an element or in a contra-element of the mould undergoes cooling later.

The present invention relates, furthermore, to apparatus for the moulding of a product in a thermoplastic material, comprising means of feeding a cooling fluid, characterised by comprising at least one jet to direct said cooling fluid directly against said product.

The apparatus has the function of directing one or more jets of a cooling fluid against one or more portions of the moulded product, to reduce its temperature and to complete the solidification of the thermoplastic material.

Preferably, the jets can be located near the mould and they begin working as soon as this is opened, before the thermoplastic material has completely solidified. The cooling fluid can be atomised and deposited uniformly on the external surface of the product, which is at a temperature near the injection temperature of the material. The liquid evaporates quickly and removes heat.

According to a preferred embodiment of the present invention, the apparatus is fitted with a number of jets sufficient to uniformly cool the product extracted from the mould. The portions of the product that tend to cool more slowly with the traditional systems can be sprayed by a larger volume of cooling fluid than other portions. It is possible to regulate the volume of fluid emitted by the jets and/or the speed of the jet. By operating selective cooling of the portions of the moulded product by means of the jets it is possible to render the process of cooling uniform, i.e. substantially all the portions of the moulded product are cooled and solidify at the same speed.

Preferably, a control unit manages the operation of the apparatus automatically. The jets can be fitted with motorised support elements and moved to any desired position. One or more sensors monitor the temperature of the surfaces of the moulded product and the control unit controls the cooling with a delay based on the temperature values detected.

For example, the apparatus is provided with television cameras that acquire infrared images of the product extracted from the mould. The images are processed by suitable computer programs to give a thermal map of the product. The control unit processes such information to regulate the number of jets to activate, their position with respect to the surfaces to be cooled, the type of cooling fluid to feed to each, etc.

Alternatively, the apparatus could include temperature sensors such as, for instance thermocouple, thermo-resistance, etc.

The method and apparatus according to the present invention allow considerably improved performance to be obtained compared with traditional solutions. The cooling fluid directed onto the product removes heat in considerably larger quantities than was removed by the use of traditional cooling systems with channels and/or inserts. In this way, the duration of the phase cooling the thermoplastic material that shapes the moulded object is minimised, to the benefit of the productivity of the moulding process. Advantageously, the method and the apparatus according to the present invention provide for the cooling of the moulded product being carried out either after the mould has been opened, or preferably on the product already extracted from the same mould. The mould is not struck directly by the jets of cooling fluid and remains substantially hot, ready to be re-used for a new moulding cycle.

In other words, unlike what was provided by the traditional solutions, the method according to the present invention provides for the cooling of the moulded product to be effected outside of the related mould, which stays available for a new production cycle.

Preferably, the cooling fluid is chosen in such a way that it evaporates instantly (flash evaporation) on contact with the product extracted from the mould at temperatures near that of injection of the thermoplastic material. The thermal energy dissipated by the cooling fluid to change phase is high in comparison with the energy normally dissipated by the traditional systems under the same operational conditions. Alternatively, the cooling fluid bathes the product and removes heat by convection.

Compared to the traditional solutions, the method and the apparatus according to the present invention enables the cooling phase of the moulded product to be optimised, both in respect of the time of the thermal treatment and the uniformity of the cooling of the product.

Further aspects and advantages of the present invention will become clearer from the description that follows, given by way of illustration and not limiting, with reference to the attached schematic sketches, in which:
- Figure 1 is a flow-chart of the method according to the present invention;
- Figure 2 is a schematic view of the apparatus according to the present invention;
- Figure 3 is a perspective view of an apparatus according to the present invention.

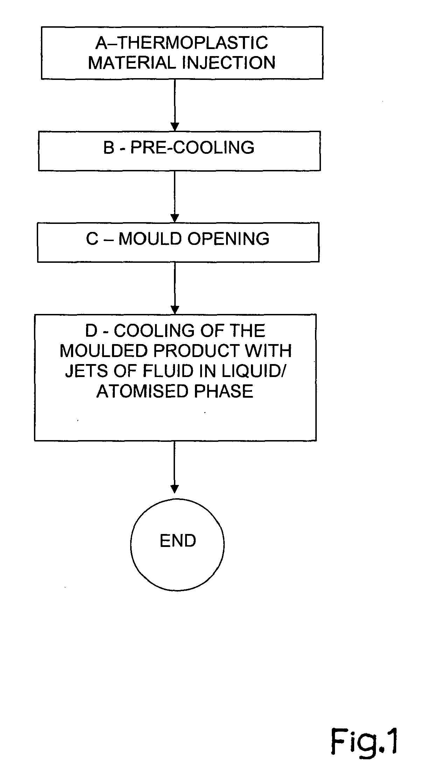

With reference to Figure 1, the method according to the present invention includes Phase D, i.e. a phase to cool at least a portion of the product - produced by hot moulding - by one or more jets of a cooling fluid directed directly against such portion.

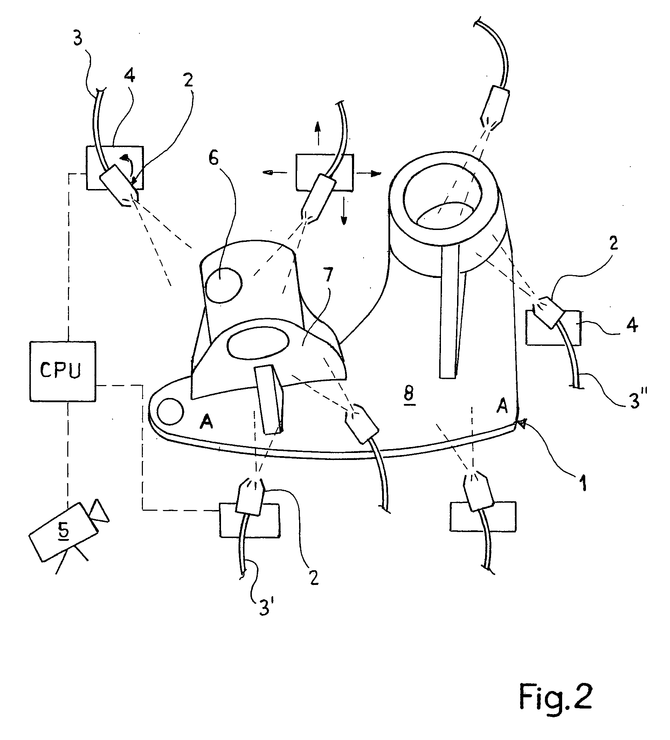

With reference to Figure 2, a product 1 is shown produced by injecting a thermoplastic material into a mould according to known techniques (phase A.), the product 1 can be produced in a polymer material, e.g. fluoropolymers, polyolefins, polyamides, polyesters, polybutene-terephthtalates, polycarbonates, polyphenyl sulfide, thermoplastic elastomers, high-performances polymers (e.g. poly-ether-ether-ketone), etc..

The thermoplastic material is heated to temperatures higher than the melting temperature and injected into a special hollow space cut into a mould. The mould is normally formed by two interlocking halves. The injection of the thermoplastic material is effected by suitable injection channels cut into at least one half of the mould.

The traditional mould is provided with channels, cut from the solid metal in the two halves in proximity of the internal hollow space, in which a cooling fluid - usually water - is made to circulate. Water takes heat from the mould and from the material injected into it, causing the solidification of the same material and the consolidation of the structure of the moulded product.

The apparatus according to the present invention has the function of cooling product 1 when the same is at least partly out of its related mould.

The apparatus includes at least one jet 2 fed with a cooling fluid. In the embodiment shown, the jet 2 is fed by the line 3.

The cooling fluid can be a vapour or a liquid. Cooling fluids suited for the purpose are, e.g. glycol, alcohol, and ammonia. Preferably, demineralized water is used.

In general, jet 2 can be fed with a plurality of cooling fluids, according to the demands. For example, line 3 can be fed by pumps connected to different reservoirs, each containing a different cooling fluid.

Jet 2 can be oriented in space. For example, jet 2 is hinged to a mobile support element 4, which in turn is operated by a motor and is mobile in space.

When jet 2 is operational, it creates a jet of cooling fluid directed against product 1 to be cooled. The cooling liquid can be atomised, vaporised, reduced to spray, etc.

The operation of the apparatus according to the present invention provides for jet 2 to begin working immediately after the opening of the mould to cool one or more portions of the product 1. Product 1 can be completely removed from the mould, that is separated from the element and from the contra-element that form the mould, or it can be only partly removed from the mould, e.g. remaining partly inserted into the element or into the contra-element of the mould. Jet 2 directs a jet of cooling fluid onto the exposed parts of product 1.

The volume of cooling fluid, the size of the jet, the degree of atomisation, the direction of the jet, etc. are regulated to maximise the thermal energy dissipated. Preferably, the regulation of the operational parameters of the cooling apparatus is carried out by a CPU control unit. The control unit operates jet 2, controlling where necessary suitable valves that select the cooling fluid to feed to the line 3.

The control unit CPU is operated based on information memorised or, preferably, by feedback based on information acquired during operation, i.e. during the cooling phase.

In the embodiment shown, the control unit CPU is connected to an infrared television camera 5 that acquires images of the product 1. The images acquired are processed to give a temperature map of the related different portions of product 1. Based on the values of temperature recorded, the control unit CPU modifies the operational parameters of the jet 2.

For example, if the processing of the images acquired by the television camera 5 shows that the temperature of the surface 6 of the product 1 in polycarbonate is higher than 200° C, the control unit CPU feeds the jet 2 with a calibrated volume of water. The jet 2 directs the volume of water, atomised, against the surface 6 of the product 1. On contact with such surface 6, the water evaporates instantly, that is it suffers a "flash-type" evaporation removing heat from the same surface 6 and quickly cooling it.

As an alternative to the television camera 5, the control unit CPU can be joined to one or more sensory of temperature, e.g. thermocouple, thermo-resistance, etc..

The apparatus according to the invention allows the cooling phase of individual portions of the product 1 to be effected. In other words, the apparatus can work by locally cooling the product 1, e.g. intervening on the portions that, following the moulding process, remain at higher temperatures (hot spots).

Preferably, the apparatus comprises a plurality of jets 2. The control unit CPU operates every jet to cool different areas of the product 1 in a uniform way.

In other words, the apparatus according to the present invention can be used for cooling individual parts of the product 1, or to cool the same product 1 in its entirety.

In some circumstances, it is important that the material that composes the product 1 cools uniformly, i.e. that the different portions and surfaces of the product 1 reduce their temperature by the same quantity and over the same interval of time. The control unit CPU is able to position, direct and regulate the jets 2 in such a way as to render the cooling of the product 1 uniform. For example, the jets 2 used to cool wide surfaces of the product 1, or to cool considerably thick walls, are fed with increased volumes of cooling fluid compared to how much is needed by the jets 2 to cool small areas or thin walls.

In the embodiment shown in figure 2, the prominence 7 of the product 1 is cooled by the flows produced by four jets 2, while the higher surface 8 is cooled by a single jet 2, e.g. with a different cooling fluid.

It will be clear to those skilled in the art that the cooling fluid is chosen to be chemically stable in relationship to the nature of the thermoplastic material that forms product 1.

Advantageously, the apparatus according to the present invention enables a drastic reduction in the duration of the cooling phase of the product 1, compared to the time required using traditional cooling systems. The thermal energy that can be dissipated by the evaporation of the cooling fluid from the surfaces of product 1 is notably greater than the thermal energy dissipated in a mould provided with a series of fluid-circulation channels. By evaporating, the cooling fluid also removes the latent heat of the change of phase from product 1. Even in the case in which the cooling fluid sprinkled by the jets 2 doesn't evaporate, but strikes the product 1 as a shower, the dissipated thermal energy is greater compared with what was provided for by the traditional systems in the mould. The fluid convection thermal exchange coefficient of cooling of product 1 is greater than the of thermal exchange coefficients between the material injected into a traditional mould and the surfaces of the hollow space of the same mould.

Furthermore, the apparatus according to the present invention provides for the cooling of the product 1 outside the related mould, which is made available for a new cycle of production.

The opening of the mould is early compared with what would be expected traditionally. The product 1, not yet solidified, could suffer structural yielding. To avoid this problem, the method according to the present invention provides for product 1 to undergo to a pre-cooling phase in the mould, by known apparatus and methods. The pre-cooling phase has a minimum duration that is sufficient to allow the consolidation of the product 1 so that the early opening of the mould doesn't cause the product 1 to yield.

The pre-cooling phase (Phase B of the flow diagram in Figure 1) can be aimed at obtaining solidification of the material injected into the mould in the areas of greater structural loading for the product 1. The apparatus 1 begins working following the early opening of the mould, to complete the cooling of the product 1.

Alternatively, or jointly to the phase of pre-heating, the method according to the present invention provides for the cooling fluid jets to be used to support the product 1 on being removed from the mould but not yet structurally stable.

In other words, one or more jets 2 can be regulated to produce a jet of cooling fluid that strikes the product 1 and supports it during the consolidation of the thermoplastic material.

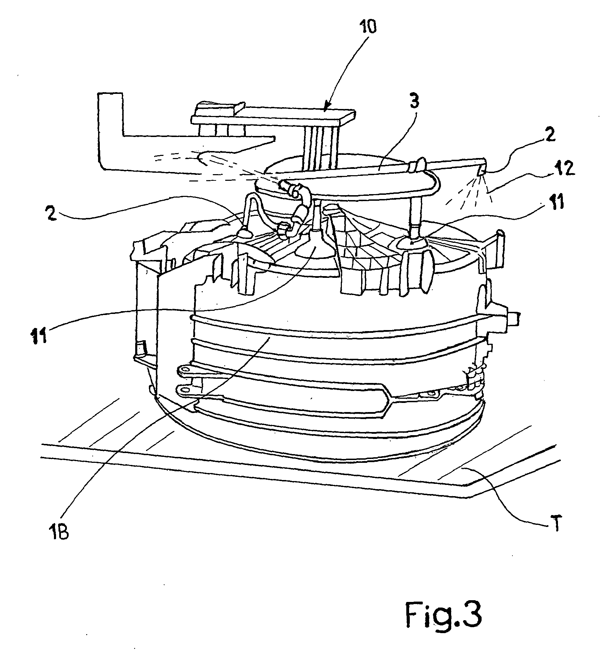

Figure 3 shows a further example. The apparatus and the method according to the present invention are applied to the production of washing machine drums 1B produced in a thermoplastic material.

The traditional cycle of production of the moulded drums 1B generally includes at least five phases:
- material injection into the mould;
- cooling of the polymer in the mould;
- opening of the mould and extraction of the drum 1B;
- movement of the moulded drum onto a support T, e.g. a roller table; and
- insertion of metal components into the drum (not shown).

A further phase of post-cooling of the drum 1B normally follows the aforementioned phases, a phase that requires non-negligible time compared to the preceding phases and that also requires bulky apparatus to carry it out.

The duration of the traditional production cycle, i.e. the time necessary to implement the five phases, from the injection of the plastic material to the final insertion of the metal components into the moulded drum 1B, is about 165 seconds. The following post-cooling phase lasts around 240 seconds and allows the drum to cool from its hot-moulded surface temperature of about 105-120°C, bringing it to a lower temperature that allows its movement (if necessary by hand) and/or stacking, without risks to strength of the structure of the same drum 1B.

Applying the method according to the present invention, the mould (not shown) for the production of drums is opened earlier than would be done in the traditional production cycle. The post-cooling is performed by sprinkling an aerosol of the cooling liquid (water) during the phase of movement of the drums 1B, as shown in Figure 3.

Particularly, the drums 1 B are extracted from the mould by a pneumatic lifting system 10, using suckers 11. The drum 1B extracted from the related mould are positioned on a roller conveyer T to be transported to the station where the insertion of the metal inserts is provide for.

During the movement of each drum, more jet atomisers 3 fixed to correspond to the suckers 11 are activated to strike the drum with an aerosol of the cooling liquid 12.

Further jets 3 can be provided on the various cooling stations of the conveyer, activated by photocells that detect the passage of the drum.

Due to the present invention, the temperature of the moulded drum 1B, struck by the atomised jets 12 of cooling liquid (water), is quickly brought to the saturation temperature of the liquid. In this way, the time of post-cooling is drastically reduced compared with how much was required in the known art. Furthermore, the metal inserts can be added to the drum with greater simplicity (greater adhesion of the inserts to the plastic of the drum). Possible aesthetic defects due to the treatment of the hot surface of the drum 1B by the suckers 11, or by the manipulators used in general for this purpose, are also less probable.

The method and the apparatus according to the present invention enable the times of production to be reduced by around 35 seconds. The chart below shows the times related to the phases of the traditional production cycle compared to the times related to the phases of the cycle using the early opening of the mould and activation of the jets fed with refrigerant liquid (water) according to the present invention.

The general cooling time, without the post-cooling phase, is equal to 135 seconds, with a saving of around 18% on the process time.

**Chart 1**

| **Phases** | **Traditional cycle times [sec]** | **Cycle times according to the invention [sec]** |
|---|---|---|
| Material injection | 25 | 25 |
| Cooling the mould | 105 | 70 |
| Opening mould and picking product | 20 | 23 |
| Transfer of product onto roller table | 10 | 12 |
| Insertion of metal components | 5 | 5 |
| **Time of production** | **165** | **135** |
| Post-cooling component | 240 | 180 |
| **Overall time** | **405** | **315** |

It is obvious that the method and apparatus according to the present invention allow the productivity of the moulding process to be maximised, the duration of the cooling phase to be minimised, and the mould to be made available for new productive cycles in shorter time. The quality of the products produced with the thermal treatment provided by the method and apparatus 1 is high because the cooling is uniform.

## Claims

1. Method for the hot moulding of a product (1, 1B) in thermoplastic material, **characterised by** comprising the phase of cooling at least one portion of said product by one or more jets (12) of a cooling fluid directed against said portion.

2. Method according to the Claim 1, **characterised by** said cooling phase following at least partial opening of the mould.

3. Method according to any of the preceding Claims, **characterised by** said cooling phase following the extraction of said product from the mould.

4. Method according to any of the preceding Claims, **characterised by** comprising a phase dissipating heat by the evaporation of said cooling fluid on contact with the surface of said product.

5. Method according to any of the preceding Claims, **characterised by** said cooling fluid jets being directed against the portions of said product that are at the highest temperature (hot spots).

6. Method according to any of the preceding Claims, **characterised by** said cooling fluid jets supporting at least partly said product during cooling.

7. Method according to any of the preceding Claims, **characterised by** said cooling phase following a phase of pre-cooling the product inside the mould.

8. Method according to any of the preceding Claims, **characterised by** said cooling fluid being chosen from a group comprising dry air, helium, nitrogen, oxygen, argon, water, HFC, glycol, freon, Halon, alcohol, ammonia.

9. Apparatus for the hot moulding of a product in thermoplastic material, comprising means of feeding a cooling fluid, **characterised by** comprising at least one jet to direct said cooling fluid directly against said product.

10. Apparatus according to Claim 9, **characterised by** said at least one jet being external to the mould.

11. Apparatus according to Claim 9 or Claim 10, **characterised by** comprising sensors for the measurement of the temperature of one or more portions of said product and a means of control to regulate the orientation of said at least one jet and/ox the volume of cooling fluid on the basis of the temperature values measured.

12. Apparatus according to any of the preceding Claims from 9 to 11, **characterised by** comprising a plurality of jets, each capable of being orientated to direct said cooling fluid against the portions of said product at more elevated temperature.

13. Mould for products in plastic material, **characterised by** comprising the apparatus according to any of the preceding Claims.

14. Use of the apparatus according to one any of the preceding Claims for the production of moulded objects.
